(19) Europäisches Patentamt
European Patent Office
Office européen des brevets

(11) EP 4 772 476 A1

(12) EUROPEAN PATENT APPLICATION
published in accordance with Art. 153(4) EPC

(43) Date of publication:
08.07.2026 Bulletin 2026/28

(51) International Patent Classification (IPC):
C01G 53/00 (2025.01)    H01M 4/525 (2010.01)
H01M 10/0525 (2010.01)

(21) Application number: 24939398.4

(22) Date of filing: 14.10.2024

(52) Cooperative Patent Classification (CPC):
Y02E 60/10

(86) International application number:
PCT/CN2024/124679

(87) International publication number:
WO 2025/241384 (27.11.2025 Gazette 2025/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.05.2024 CN 202410642976

(71) Applicant: XTC New Energy Materials (Xiamen)
Ltd.
Xiamen, Fujian 361026 (CN)

(72) Inventors:
• ZENG, Leiying
Xiamen, Fujian 361026 (CN)
• WU, Zhun
Xiamen, Fujian 361026 (CN)
• CHEN, Hongming
Xiamen, Fujian 361026 (CN)
• LIU, Ailian
Xiamen, Fujian 361026 (CN)

(74) Representative: Metida
Gyneju str. 16
01109 Vilnius (LT)

(54) **TERNARY POSITIVE ELECTRODE MATERIAL PRECURSOR, PREPARATION METHOD THEREFOR AND USE THEREOF**

(57) The present disclosure provides a ternary positive electrode material precursor, a preparation method therefor, and use thereof. The alkali content of the reaction system is precisely controlled by balancing the flow rates of the metal salt solution and the nitrogen gas, so as to ensure that needle-shaped primary particles are formed and to control the growth orientation of crystal planes of a crystal, so that the crystal planes grow in a certain orientation. On different crystal planes, by controlling the flow rate of the metal salt solution, the growth units are allowed to continuously diffuse to the crystal surface then embed into the crystal lattice from desired sites of the surface, thus keeping the ratio of the grain sizes in the range mentioned above. The method can precisely control the ratio of the grain sizes of the ternary positive electrode material precursor. The ternary positive electrode material can follow the orientation of the crystal plane of the precursor, thereby optimizing the orientation of the crystal plane of the ternary positive electrode material, which can facilitate the lithium ions deintercalation. Thereby cycle performances of the positive electrode material can be improved.

FIG. 1

**Description**

FIELD

The disclosure relates to batteries, and more particularly, to a ternary positive electrode material precursor, a preparation method for the ternary positive electrode material precursor, and use of the ternary positive electrode material precursor.

BACKGROUND

Currently, commercially available positive electrode materials mainly include lithium iron phosphate, lithium cobalt oxide, lithium manganese oxide, and ternary positive electrode materials (NCM). Ternary positive electrode materials are usually prepared by calcining nickel-cobalt-manganese ternary positive electrode material precursors with lithium sources, and optionally coated with other metal ions. The precursors can be prepared by hydroxide co-precipitation.

However, the existing ternary positive electrode material precursors have low specific surface energy on the (001) crystal plane. During the co-precipitation reactions, the precursors tend to grow along a specific crystal plane. Since the transport channels of the lithium-ions are along an active crystal plane, the specific crystal plane with an excessively large size will result in longer and narrower of the transport channels of the lithium-ion. Thus, the insertion/extraction capabilities of the lithium-ions in the ternary positive electrode material may be weak, which affects the capacity of the ternary positive electrode material. To improve the transport characteristics of the lithium-ions, fast-ion conductors can be coated on the ternary positive electrode material. However, the fast-ion conductors may only improve the transport rate of the lithium-ions on the surface of the positive electrode material other than inside the positive electrode material, and the use of the coatings often results in a loss of energy density of the positive electrode material.

SUMMARY

The purpose of the present disclosure is to provide a preparation method for a ternary positive electrode material precursor, which can adjust a crystal structure of the precursor to keep a ratio of grain sizes of a crystal particle within a preset range, thereby improving performances of the ternary positive electrode material.

Furthermore, the ternary positive electrode material precursor prepared by the method, a ternary positive electrode material prepared by the ternary positive electrode material precursor, and a lithium-ion battery includes the ternary positive electrode material are also provided of the present disclosure.

A preparation method for a ternary positive electrode material precursor is provided according to an embodiment of the present disclosure. The method includes the following steps:

solution preparing stage: mix a nickel salt, a cobalt salt, and a manganese salt to obtain a metal salt solution, and prepare a complexing agent solution and a precipitant solution;

first coprecipitation reaction stage: add deionized water into a reaction vessel, add the complexing agent solution and the precipitant solution into the reaction vessel when the deionized water in the reaction vessel is stirred, thereby adjust an ammonia content in the reaction vessel to be in a range of 2 g/L to 3 g/L, and adjust a pH value in the reaction vessel to be in a range of 11 to 12; simultaneously introduce nitrogen gas, the metal salt solution, the complexing agent solution, and the precipitant solution into the reaction vessel, thereby adjust the pH value of a reaction system in the reaction vessel to be in a range of 9 to 13 to generate primary particles, wherein the primary particles have a median particle size D50 of 1.60 $\mu$m to 2.00 $\mu$m; wherein a flow rate of nitrogen gas is n times as much as a flow rate of the metal salt solution, $200 \leq n \leq 1000$;

second coprecipitation reaction stage: increase the flow rate of the nitrogen gas, a stirring speed of the reaction vessel, and the flow rate of the metal salt solution, thereby adjust the pH value in the reaction system to be in a range of 9 to 13 to generate secondary particles, wherein the secondary particles have a median particle size D50 of 3.30 $\mu$m to 5.00 $\mu$m; wherein the increased flow rate of nitrogen gas is n times as much as the flow rate of the metal salt solution, $200 \leq n \leq 1000$;

post-processing stage: a slurry obtained from the second coprecipitation reaction stage is centrifuged, washed, and dried to obtain the ternary positive electrode material precursor; wherein a ratio of a grain size D(100) for the (100) crystal plane to a grain size D(001) for the (001) crystal plane satisfies a relationship: D(100)/D(001)$\leq$1.98.

In an embodiment, the flow rate of the nitrogen gas is in a range of 1.5 $m^3$/h to 10 $m^3$/h, and the flow rate of the metal salt solution is in a range of 2.5 L/h to 10 L/h.

In an embodiment, the nickel salt includes at least one of nickel sulfate, nickel nitrate, and nickel chloride. The cobalt salt includes at least one of cobalt sulfate, cobalt nitrate, and cobalt chloride. The manganese salt includes at least one of manganese sulfate, manganese nitrate, and manganese chloride. A concentration of the metal salt solution is in range of 2 mol/L to 3 mol/L.

In an embodiment, the precipitant solution includes a NaOH solution or a KOH solution, and a concentration of the precipitant solution is in a range of 5 mol/L to 20 mol/L.

In an embodiment, the complexing agent solution includes at least one of ammonia, urea, and soluble ammonium salts, and a concentration of the complexing agent solution is in a range of 2 mol/L to 10 mol/L.

In an embodiment, a reaction temperature in the reaction vessel is in a range of 30°C to 70°C.

A ternary positive electrode material precursor is provided according to an embodiment of the present disclosure. The ternary positive electrode material precursor is prepared by the method mentioned above. A chemical formula of the ternary positive electrode material precursor is $Ni_xCo_yMn_z(OH)_2$, wherein $0.6 \leq x < 1$, $0 < y < 0.2$, $0 < z < 0.2$, and $x+y+z=1$. A ratio of a grain size D(100) for the (100) crystal plane to a grain size D(001) for the (001) crystal plane satisfies a relationship: $D(100)/D(001) \leq 1.98$.

A ternary positive electrode material is provided according to an embodiment of the present disclosure. The ternary positive electrode material is prepared by the ternary positive electrode material precursor mentioned above.

In an embodiment, a chemical formula of the ternary positive electrode material is $LiNi_xCo_yMn_z(OH)_2$, wherein $0.6 \leq x < 1$, $0 < y < 0.2$, $0 < z < 0.2$, and $x+y+z= 1$.

A lithium-ion battery is provided according to an embodiment of the present disclosure. The lithium-ion battery includes the ternary positive electrode material mentioned above.

In the preparation method of the ternary positive electrode material precursor in the present disclosure, the alkali content of the reaction system is precisely controlled by balancing the flow rates (or flow amounts) of the metal salt solution and the nitrogen gas. Thus, the reaction system becomes more stable and controllable, which ensures that needle-like primary particles are formed during the co-precipitation process. Thereby, the growth orientation of crystal planes can be controlled, and the crystal planes may grow in specific orientations. On different crystal planes, by controlling the flow rate of the metal salt solution, the growth units are allowed to continuously diffuse to the surface of the crystal then embed into the crystal lattice from desired sites of the surface, thus keeping the ratio of the grain sizes of the crystal particle in the range mentioned above. The preparation method of the present disclosure can precisely control the ratio of the grain sizes of the crystal particle of the ternary positive electrode material precursor. The ternary positive electrode material can follow the orientation of the crystal plane of the precursor, thereby optimizing the orientation of the crystal plane of the ternary positive electrode material, which can facilitate the lithium ions deintercalation. Thereby cycle performances of the positive electrode material can be improved. The preparation method of the present disclosure is simple, environmentally friendly, and easy to industrialize.

BRIEF DESCRIPTION OF THE DRAWINGS

Implementations of the present technology will now be described, by way of embodiment, with reference to the attached figures.

FIG. 1 is a scanning electron microscope (SEM) image of a ternary positive electrode material precursor prepared by Example 1 of the present disclosure.

FIG. 2 is an SEM image of a cross-section of the ternary positive electrode material precursor prepared by Example 1 of the present disclosure after ion polishing (CP).

FIG. 3 is an SEM image of the ternary positive electrode material precursor prepared by Comparative Example 1 of the present disclosure.

FIG. 4 is an SEM image of a cross-section of the ternary positive electrode material precursor prepared by Comparative Example 1 of the present disclosure after ion polishing (CP).

FIG. 5 shows an X-ray diffraction (XRD) pattern of the ternary positive electrode material precursor prepared by Example 1 of the present disclosure.

FIG. 6 shows an XRD pattern of the ternary positive electrode material precursor prepared by Comparative Example 1 of the present disclosure.

DETAILED DESCRIPTION OF THE DISCLOSURE

Unless otherwise defined, all technical and scientific terms used herein have the same meaning as commonly understood by one of ordinary skill in the art to which the embodiments of the present disclosure belong. The terminologies used herein are for the purpose of describing only portions of the embodiments of the present disclosure, rather than all the embodiments. Where specific conditions are not specified in the embodiments, they are based on conventional conditions or manufacturer's specifications. Unless otherwise specified, all reagents and instruments used are commercially available, standard products. Where there is no conflict, the following embodiments and features in the embodiments can be combined with each other.

In a first aspect, a preparation method for a ternary positive electrode material precursor is provided in the present disclosure, which includes the following S1 to S4.

S1, a solution preparation step: a nickel salt, a cobalt salt, and a manganese salt are mixed to obtain a metal salt solution. A complexing agent solution and a precipitant solution are prepared.

S2, a first coprecipitation reaction stage: deionized water is added into a reaction vessel, then the complexing agent solution and the precipitant solution are added into the reaction vessel when the deionized water is stirred. An ammonia content in the reaction vessel is adjusted to a range of 2 g/L to 3 g/L. A pH value in the reaction vessel is adjusted to a range of 11 to 12. Nitrogen gas is introduced into the reaction vessel, and the metal salt solution, the complexing agent solution, and the precipitant solution are introduced into the reaction vessel simultaneously. The pH value of a reaction system is adjusted to a range of 9 to 13. Then primary particles with a median particle size D50 of 1.60 $\mu$m to 3.00 $\mu$m are generated. Wherein a flow rate of the nitrogen gas is n times as much as a flow rate of the metal salt solution, 200≤n≤1000.

S3, a second coprecipitation reaction stage: the flow rate of nitrogen gas is increased, a stirring speed of the reaction vessel is increased, and the flow rate of the metal salt solution is increased. The pH value of the reaction system is adjusted to a range of 9 to 13. Thereby secondary particles with a median particle size D50 of 3.30 $\mu$m to 5.00 $\mu$m are generated. Wherein the increased flow rate of the nitrogen gas is n times as much as the flow rate of the metal salt solution, 200≤n≤1000.

S4, a post-processing step: a slurry obtained from the second coprecipitation reaction stage is centrifuged, washed, and dried to obtain the ternary positive electrode material precursor. A ratio of a grain size D(100) for the (100) crystal plane to a grain size D(001) for the (001) crystal plane satisfies a relationship as follows: D(100)/D(001)≤1.98.

The alkali content of the reaction system is precisely controlled by balancing the flow rates (or flow amounts) of the metal salt solution and the nitrogen gas. Thus, the reaction system becomes more stable and controllable, which ensures that needle-like primary particles are formed during the co-precipitation process. Thereby, the growth orientation of crystal planes can be controlled, and the crystal planes may grow in specific orientations. On different crystal planes, by controlling the flow rate of the metal salt solution, the growth units are allowed to continuously diffuse to the surface of the crystal and then embed into the crystal lattice from desired sites of the surface of the crystal , thus keeping the ratio of the grain sizes of the crystal particle in the range mentioned above. The method of the present disclosure can precisely control the ratio of the grain sizes of the crystal particle of the ternary positive electrode material precursor. The ternary positive electrode material can follow the orientation of the crystal plane of the precursor, thereby optimizing the orientation of the crystal plane of the ternary positive electrode material, which can expand the channels of the lithium ions deintercalation, reduce the ionic conductivity, and facilitate the lithium ions deintercalation. Thereby cycle performances of the positive electrode material can be improved.

In some embodiments, the nickel salt includes at least one of nickel sulfate, nickel nitrate, and nickel chloride. The cobalt salt includes at least one of cobalt sulfate, cobalt nitrate, and cobalt chloride. The manganese salt includes at least one of manganese sulfate, manganese nitrate, and manganese chloride. For example, the nickel salt may be, but is not limited to, nickel sulfate ($NiSO_4 \cdot 6H_2O$), the cobalt salt may be, but is not limited to, cobalt sulfate ($CoSO_4 \cdot 7H_2O$), and the manganese salt may be, but is not limited to, manganese sulfate ($MnSO_4 \cdot H_2O$).

In some embodiments, a concentration of the metal salt solution can be in a range of 2 mol/L to 3 mol/L. For example, the concentration of the metal salt solution can be 2 mol/L, 2.1 mol/L, 2.2 mol/L, 2.3 mol/L, 2.4 mol/L, 2.5 mol/L, 2.6 mol/L, 2.7 mol/L, 2.8 mol/L, 2.9 mol/L, 3 mol/L, or any value between any two adjacent values mentioned above. Furthermore, the concentration of the metal salt solution can be in a range of 2 mol/L to 2.5 mol/L.

In some embodiments, a molar ratio of nickel, cobalt, and manganese in the metal salt solution can be 0.95:0.03:0.02.

In some embodiments, the precipitant solution includes a NaOH solution or a KOH solution.

In some embodiments, a concentration of the precipitant solution can be in a range of from 5 mol/L to 20 mol/L. For example, the concentration of the precipitant solution can be 5 mol/L, 6 mol/L, 7 mol/L, 8 mol/L, 9 mol/L, 10 mol/L, 11 mol/L, 15 mol/L, 16 mol/L, 18 mol/L, 20 mol/L, or any value between any two adjacent values mentioned above.

Furthermore, the concentration of the precipitant solution can be in a range of 6 mol/L to 9 mol/L.

In some embodiments, the complexing agent solution includes at least one of ammonia ($NH_3 \cdot H_2O$), urea, and soluble ammonium salts. A concentration of the complexing agent solution can be in a range of 2 mol/L to 10 mol/L. For example, the concentration of the complexing agent solution can be 2 mol/L, 3 mol/L, 4 mol/L, 5 mol/L, 6 mol/L, 7 mol/L, 8 mol/L, 9 mol/L, 10 mol/L, or any value between any two adjacent values mentioned above.

Furthermore, the concentration of the complexing agent solution can be in a range of 4 mol/L to 8 mol/L.

In some embodiments, a reaction temperature inside the reaction vessel can be in a range of 30°C to 70°C. Furthermore, the reaction temperature is in a range of 40°C to 55°C.

In some embodiments, in steps S2 and S4, the ammonia concentration in the reaction system can be in a range of 0.05 mol/L to 0.9 mol/L.

In some embodiments, the reaction vessel may be, but is not limited to, a reaction vessel.

In a second aspect, a ternary positive electrode material precursor prepared by the method mentioned above is provided according to an embodiment of the present disclosure. A chemical formula of the ternary positive electrode material precursor is $Ni_xCo_yMn_z(OH)_2$, wherein $0.6{\leq}x<1$, $0<y<0.2$, $0<z<0.2$, and $x+y+z=1$. A ratio of a grain size D(100) for the (100) crystal plane to a grain size D(001) for the (001) crystal plane satisfies the following relationship: $D(100)/D(001){\leq}1.98$.

In a third aspect, a ternary positive electrode material is provided according to an embodiment of the present disclosure. The ternary positive electrode material is prepared by mixing and sintering the ternary positive electrode material precursor mentioned above with a lithium source. A chemical formula of the ternary positive electrode material is $LiNi_xCo_yMn_z(OH)_2$, wherein $0.6{\leq}x<1$, $0<y<0.2$, $0<z<0.2$, and $x+y+z=1$.

In a fourth aspect, a lithium-ion battery is provided according to an embodiment of the present disclosure. The lithium-ion battery includes a positive electrode, a negative electrode, and a separator. The positive electrode includes a positive current collector and a positive active material layer disposed on a surface of the positive current collector. The positive active material layer includes the ternary positive electrode material mentioned above.

Implementations of the present disclosure will now be described in combination with examples and comparative examples.

Example 1

S1, $NiSO_4{\cdot}6H_2O$, $CoSO_4{\cdot}7H_2O$, and $MnSO_4{\cdot}H_2O$ were weighed and dissolved in deionized water according to a molar ratio of Ni : Co : Mn = 0.95:0.03:0.02, to prepare a 2.2 mol/L of a metal salt solution. A 7.8 mol/L NaOH (sodium hydroxide) aqueous solution was prepared as a precipitant, and a 6.5 mol/L $NH_3{\cdot}H_2O$ (ammonia) solution was prepared as a complexing agent.

S2, deionized water was added into a 100 L reaction vessel until the deionized water is level with a flow guiding hood. A temperature in the reaction vessel was controlled at 40°C and a stirring speed of the deionized water was adjusted to 34 Hz. Then ammonia solution and sodium hydroxide solution are added into the reaction vessel to adjust the bottom liquid, so that the ammonia content in the reaction vessel was 2.5 g/L and the pH value in the reaction vessel was 11.75. Nitrogen gas (99.99 vol%) at a flow rate of 1.5 $m^3$/h was introduced in the reaction vessel. The metal salt solution, sodium hydroxide aqueous solution, and ammonia solution were added into the reaction vessel simultaneously by a metering pump. A flow rate of the metal salt solution was set to 2.5 L/h (the flow rate of the nitrogen gas is n times as much as a flow rate of the metal salt solution, n=600). Addition rates of sodium hydroxide solution and ammonia solution were automatically adjusted according to the pH value and ammonia concentration to ensure that the ammonia content gradually increases to 4 g/L and the pH value gradually decreases to 11.60. Thus, the first stage of coprecipitation reaction is carried out until a median particle size D50 of an obtained product is 1.60 $\mu$m (micrometers). During the reaction process, the remaining clear liquid can be discharged through a concentrator.

S3, the nitrogen flow rate was adjusted to 3.0 $m^3$/h, the pH value was gradually adjusted to 11.30, the stirring speed was increased to 36 Hz, the flow rate of the metal salt solution was adjusted to 5 L/h (n=600), the ammonia content was maintained at 4 g/L, then the pH value was gradually decreased to 11.20. Thus, the second stage coprecipitation reaction was carried out until a median particle size D50 of an obtained product is 3.30 $\mu$m.

S4, a slurry obtained in step S3 is aged (aging temperature was 40°C, aging time was 2 h). After aging, a filter cake was washed alternately with alkaline solution and pure water at 40°C. Then the filter cake is placed in a hot air circulating oven at 130°C and dried for 12 h to obtain a powdered ternary positive electrode material precursor.

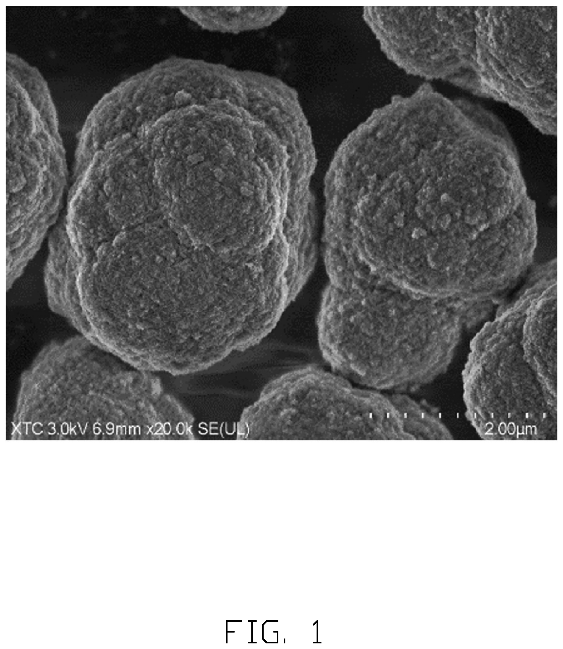

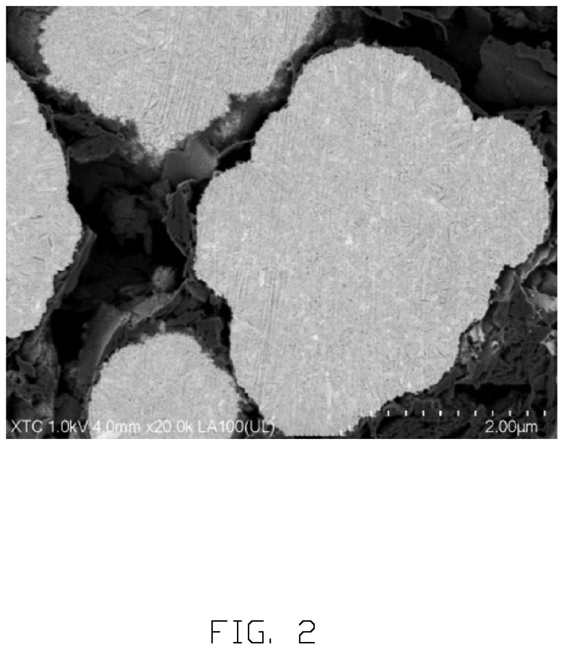

SEM images of the ternary positive electrode material precursor prepared by Example 1 are shown in FIGs. 1 and 2. Referring to FIGs. 1 and 2, the precursor includes secondary particles formed by aggregation of the primary particles. The precursor includes a uniformly arranged dense core and a uniformly enveloping dense outer layer. The dense core has a dense structure formed by the primary particles stacked into unit cells, while the dense outer layer has a planar structure formed by stacked lath-like primary particles.

Example 2

The difference between Example 2 and Example 1 is that in step S2, the nitrogen flow rate is 2 $m^3$/h and n=800; in step S3, the nitrogen flow rate is 4 m$^3$/h and n=800. All other aspects were the same as in Example 1 and will not be repeated here.

Comparative Example 1

The difference between Comparative Example 1 and Example 1 is that in step S2, the nitrogen flow rate is 5 m$^3$/h and n=2000; in step S3, the nitrogen flow rate is 10 m$^3$/h and n=2000. All other aspects are the same as in Example 1 and will not be repeated here.

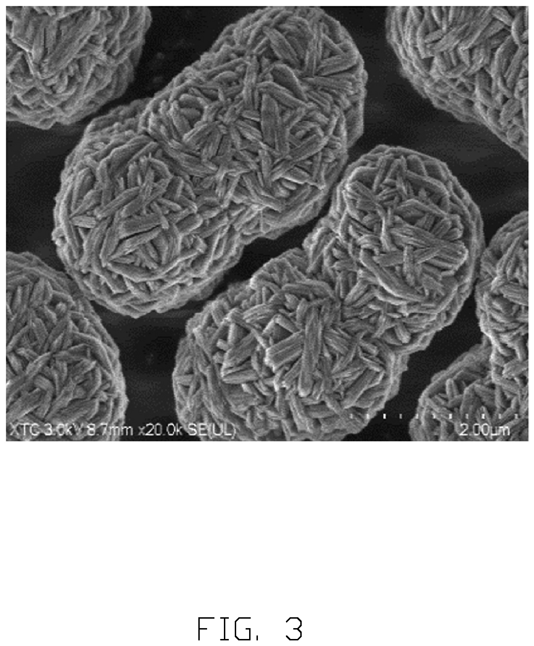

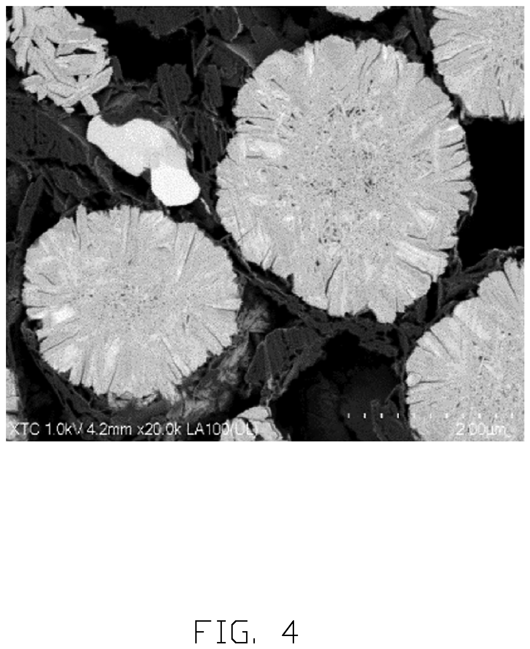

SEM images of the ternary positive electrode material precursor prepared by Comparative Example 1 are shown in FIGs. 3 and 4. Referring to FIGs. 3 and 4, the precursor includes secondary particles formed by aggregation of the primary particles. The precursor includes a loose core and three dense outer layers formed on the surface of the loose core. The loose core has a honeycomb-like structure formed by interlaced fibrous primary particles, while the dense outer layers have a radial structure formed by lath-like primary particles.

Comparative Example 2

The difference between Comparative Example 2 and Example 1 is that in step S2, the nitrogen flow rate is 0.2 m$^3$/h and n=80; in step S3, the nitrogen flow rate is 0.4 m$^3$/h and n=80. All other aspects are the same as in Example 1 and will not be repeated here.

The reaction parameters for the above Examples and Comparative Examples are shown in Table 1.

Table 1

|  |  |  | Ex. 1 | Ex. 2 | Comp. Ex. 1 | Comp. Ex. 2 |
|---|---|---|---|---|---|---|
| | S1 | Ni:Co:Mn | 0.95:0.03:0.02 | 0.95:0.03:0.02 | 0.95:0.03:0.02 | 0.95:0.03:0.02 |
| | | Concentration of the metal salt solution (M) | 2.2 | 2.2 | 2.2 | 2.2 |
| | | Concentration of the precipitant (M) | 7.8 | 7.8 | 7.8 | 7.8 |
| | | Concentration of the complexing agent (M) | 6.5 | 6.5 | 6.5 | 6.5 |
| | S2 | T (°C) | 40 | 40 | 40 | 40 |
| | | Ammonia content (g/L) | 4 | 4 | 4 | 4 |
| | | Flow rate of nitrogen gas (m$^3$/h) | 1.50 | 2.00 | 5.00 | 0.20 |
| | | pH | 11.60 | 11.60 | 11.60 | 11.60 |
| | | Stirring speed (Hz) | 34 | 34 | 34 | 34 |
| | | Flow rate of the metal salt solution (L/h) | 2.5 | 2.5 | 2.5 | 2.5 |
| | | n | 600 | 800 | 2000 | 80 |
| | | D50 (μm) | 1.6 | 1.6 | 1.6 | 1.6 |
| | S3 | T (°C) | 40 | 40 | 40 | 40 |
| | | Ammonia content (g/L) | 4 | 4 | 4 | 4 |
| | | Flow rate of nitrogen gas (m$^3$/h) | 3 | 4 | 10 | 0.4 |
| | | pH | 11.2 | 11.2 | 11.2 | 11.2 |
| | | Stirring speed (Hz) | 36 | 36 | 36 | 36 |
| | | Flow rate of the metal salt solution (L/h) | 5 | 5 | 5 | 5 |
| | | n | 600 | 800 | 2000 | 80 |

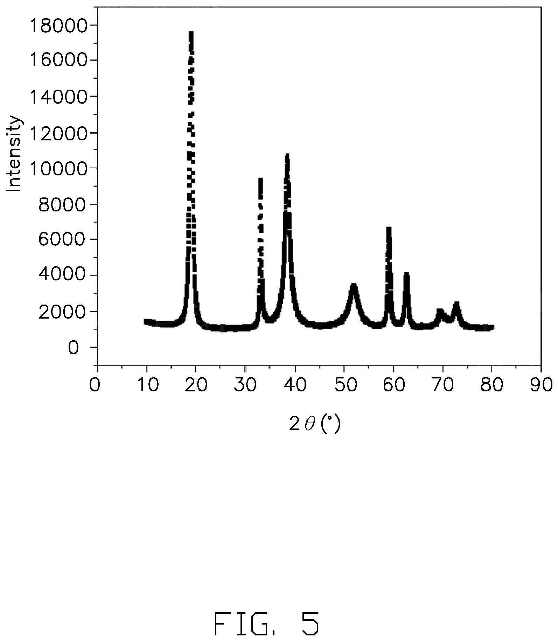

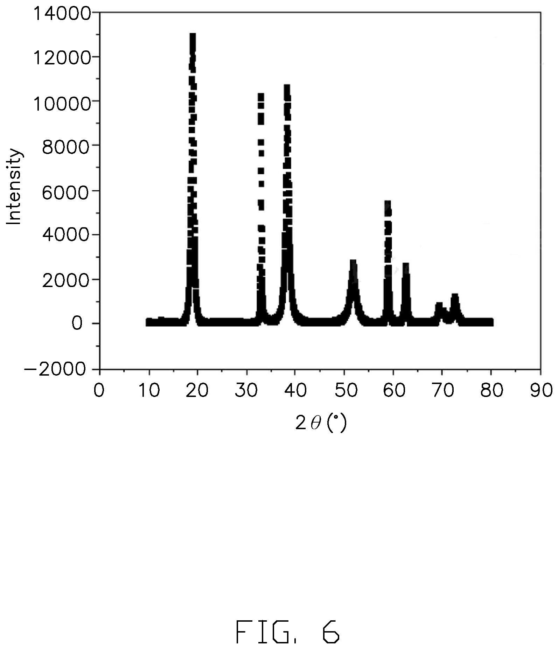

The ternary positive electrode material precursors prepared by Examples 1 and 2 and Comparative Examples 1 and 2 were separately subjected to XRD testing. The XRD patterns of the precursors prepared by Example 1 and Comparative Example 1 are shown in FIG. 5 and FIG. 6, respectively.

According to the XRD patterns and combined with the Scherrer formula: $D = \dfrac{K\lambda}{\beta cos\theta}$ (wherein K=0.89 when $\beta$ is the full width at half maximum, $\lambda$ is the X-ray wavelength, and $\theta$ is the diffraction angle). The grain size D of each crystal plane can be calculated, thereby obtaining the ratio of D(100)/D(001). Wherein the XRD test was carried out on a Bruker D8 Advance diffractometer with a scanning range of 10° to 80°, a step size of 0.02°, and a dwell time of 0.3 s.

Based on the XRD patterns and using JADE software, a ratio of a peak area I(101) for the (101) crystal plane to a peak area I(001) for the (001) crystal plane, which represented by I(101)/I(001), of the ternary positive electrode material precursors prepared by Examples 1 and 2 and Comparative Examples 1 and 2 were determined.

The median particle size D50 of the ternary positive electrode material precursors prepared by Examples 1 and 2 and Comparative Examples 1 and 2 was measured using a Mastersizer 3000 laser particle size analyzer.

Specific surface areas of the ternary positive electrode material precursors prepared by Examples 1 and 2 and Comparative Examples 1 and 2 were tested using a 3H-2000A specific surface area analyzer.

The above test results are presented in Table 2.

Table 2

|  | I(101)/I(001) | D(100)/D(001) | Specific surface area | D50 ($\mu$m) |
|---|---|---|---|---|
| Ex. 1 | 0.48 | 1.69 | 26.616 | 3.31 |
| Ex. 2 | 0.49 | 1.83 | 12.793 | 3.29 |
| Comp. Ex. 1 | 0.84 | 2.43 | 13.215 | 3.33 |
| Comp. Ex. 2 | 0.73 | 2.87 | 6.581 | 3.28 |

The ternary positive electrode material precursors prepared by Examples 1 and 2 and Comparative Examples 1 and 2 were sintered with LiOH to prepare ternary positive electrode materials. Then, each ternary positive electrode material prepared by the above examples and comparative examples was mixed with conductive active material Super P and binder PVDF in a ratio of 90:5:5 to form a slurry. Then the slurry was uniformly coated onto an aluminum foil to prepare a positive electrode sheet. A highpurity lithium sheet was used as a negative electrode sheet. A Celgard 2400 polypropylene membrane was used as a separator. The electrolyte was 1 mol/L $LiPF_6$ dissolved in a mixed solvent of EC and DMC (volume ratio 1:1). The cells were assembled into CR2032 button cells in a vacuum glove box, and then electrochemical tests were performed. The specific test steps are as follows, and the test results are shown in Table 3.

Electrochemical tests were conducted for the button cells at a voltage plateau of 4.30 V, with 2 capacity separations and 51 cycles. Data was captured using LANDdt V7 software to obtain charge/discharge capacity, first efficiency (discharge capacity/total charge capacity), and DCR data.

Table 3

|  | Total charge specific capacity (mAh/g) | Fixed-voltage discharge specific capacity (mAh/g) | Initial coulom bic efficien c (%) | 2nd Cycle discharge specific capacity (mAh/g) | Differen ce (mAh/g) | Discha rge DCR( $\Omega$) | Charge DCR($\Omega$) |
|---|---|---|---|---|---|---|---|
| Ex. 1 | 243.21 | 211.33 | 86.89 | 210.92 | -0.41 | 238.21 | 208.55 |
| Ex. 2 | 243.07 | 211.69 | 87.09 | 210.99 | -0.70 | 238.78 | 208.13 |
| Comp. Ex. 1 | 241.6 | 209.08 | 86.54 | 208.55 | -0.53 | 243.3 | 211.71 |
| Comp. Ex. 2 | 240.98 | 208.99 | 86.72 | 208.12 | -0.87 | 243.58 | 211.79 |

As shown in Table 3, the batteries prepared by the precursors of Examples 1 and 2 of the present disclosure have higher total charge specific capacity, fixed-voltage discharge specific capacity, initial coulombic efficiency, and 2nd cycle discharge specific capacity than the batteries prepared by the precursors of Comparative Examples 1 and 2. While the charging DCR and discharging DCR of the batteries prepared by the precursors of Examples 1 and 2 are lower than those the batteries prepared by the precursors of Comparative Examples 1 and 2. It is show that, the precursors prepared by Examples 1 and 2 of the present disclosure can improve the electrochemical performances of the batteries, giving the batteries higher capacity and better cycle performance.

In the preparation method of the ternary positive electrode material precursor in the present disclosure, the alkali content of the reaction system is precisely controlled by balancing the flow rates (or flow amounts) of the metal salt solution and the nitrogen gas. Thus, the reaction system becomes more stable and controllable, which ensures that needle-like primary particles are formed during the co-precipitation process. Thereby, the growth orientation of crystal planes can be controlled, and the crystal planes may grow in specific orientations. On different crystal planes, by controlling the flow rate of the metal salt solution, the growth units are allowed to continuously diffuse to the surface of the crystal then embed into the crystal lattice from desired sites of the surface, thus keeping the ratio of the grain sizes of the crystal particle in the range mentioned above. The preparation method of the present disclosure can precisely control the ratio of the grain sizes of the crystal particle of the ternary positive electrode material precursor. The ternary positive electrode material can follow the orientation of the crystal plane of the precursor, thereby optimizing the orientation of the crystal plane of the ternary positive electrode material, which can facilitate the lithium ions deintercalation. Thereby cycle performances of the positive electrode material can be improved. The preparation method of the present disclosure is simple, environmentally friendly, and easy to industrialize.

The disclosure is illustrative only, which may not limit the patent scope of the present disclosure. Those skilled in the art can make other changes and modifications according to the technical idea of the present disclosure, or directly or indirectly applied the art in other related technical fields, all such changes, modifications and applications fall within the protective scope of the claims of the present disclosure.

## Claims

1. A preparation method for a ternary positive electrode material precursor, **characterized by** comprising:

   solution preparing stage: mixing a nickel salt, a cobalt salt, and a manganese salt to obtain a metal salt solution, and preparing a complexing agent solution and a precipitant solution;
   first coprecipitation reaction stage: adding deionized water into a reaction vessel, adding the complexing agent solution and the precipitant solution into the reaction vessel when the deionized water in the reaction vessel is stirred, thereby adjusting an ammonia content in the reaction vessel to be in a range of 2 g/L to 3 g/L, and adjusting a pH value in the reaction vessel to be in a range of 11 to 12; simultaneously introducing nitrogen gas, the metal salt solution, the complexing agent solution, and the precipitant solution into the reaction vessel, thereby adjusting the pH value of a reaction system in the reaction vessel to be in a range of 9 to 13 to generate primary particles, wherein the primary particles have a median particle size D50 in a range of $1.60\ \mu m$ to $2.00\ \mu m$; wherein a flow rate of the nitrogen gas is n times as much as the flow rate of the metal salt solution, $200 \leq n \leq 1000$;
   second coprecipitation reaction stage: increasing the flow rate of the nitrogen gas, a stirring speed of the reaction vessel, and the flow rate of the metal salt solution, thereby adjusting the pH value in the reaction system to be in a range of 9 to 13 to generate secondary particles, wherein the secondary particles have a median particle size D50 in a range of $3.30\ \mu m$ to $5.00\ \mu m$; wherein the increased flow rate of the nitrogen gas is n times as much as the flow rate of the metal salt solution, $200 \leq n \leq 1000$;
   post-processing stage: centrifuging, washing, and drying a slurry obtained from the second coprecipitation reaction stage to obtain the ternary positive electrode material precursor; wherein a ratio of a grain size D(100) for the (100) crystal plane to a grain size D(001) for the (001) crystal plane satisfies a relationship: $D(100)/D(001) \leq 1.98$.

2. The preparation method of claim 1, **characterized in that**, the flow rate of the nitrogen gas is in a range of $1.5\ m^3/h$ to $10\ m^3/h$, the flow rate of the metal salt solution is in a range of 2.5 L/h to 10 L/h.

3. The preparation method of claim 1, **characterized in that**, the nickel salt comprises at least one of nickel sulfate, nickel nitrate, and nickel chloride; the cobalt salt comprises at least one of cobalt sulfate, cobalt nitrate, and cobalt chloride; the manganese salt comprises at least one of manganese sulfate, manganese nitrate, and manganese chloride; a concentration of the metal salt solution is in a range of 2 mol/L to 3 mol/L.

4. The preparation method of claim 1, **characterized in that**, the precipitant solution comprises a NaOH solution or a KOH solution, a concentration of the precipitant solution is in a range of 5 mol/L to 20 mol/L.

5. The preparation method of claim 1, **characterized in that**, the complexing agent solution comprises at least one of ammonia, urea, and soluble ammonium salts, a concentration of the complexing agent solution is in a range of 2 mol/L to 10 mol/L.

6. The preparation method of claim 1, **characterized in that**, a reaction temperature in the reaction vessel is in a range of 30°C to 70°C.

7. A ternary positive electrode material precursor, **characterized by** being prepared by the preparation method of any one of claims 1 to 6, wherein a chemical formula of the ternary positive electrode material precursor is $Ni_xCo_yMn_z(OH)_2$, $0.6 \leq x < 1$, $0 < y < 0.2$, $0 < z < 0.2$, and $x+y+z=1$, and a ratio of a grain size D(100) for the (100) crystal plane to a grain size D(001) for the (001) crystal plane satisfies a relationship: $D(100)/D(001) \leq 1.98$.

8. A ternary positive electrode material, **characterized by** being prepared by the ternary positive electrode material precursor of claim 7.

9. The ternary positive electrode material of claim 8, **characterized in that**, a chemical formula of the ternary positive electrode material is $LiNi_xCo_yMn_z(OH)_2$, wherein $0.6 \leq x < 1$, $0 < y < 0.2$, $0 < z < 0.2$, and $x+y+z=1$.

10. A lithium-ion battery, **characterized by** comprising the ternary positive electrode material of claim 8 and 9.

XTC 3.0kV 6.9mm x20.0k SE(UL)                    2.00μm

FIG. 1

FIG. 2

FIG. 3

FIG. 4

FIG. 5

FIG. 6

**EP 4 772 476 A1**

## INTERNATIONAL SEARCH REPORT

International application No.

**PCT/CN2024/124679**

### A. CLASSIFICATION OF SUBJECT MATTER

C01G53/00(2025.01)i; H01M4/525(2010.01)i; H01M10/0525(2010.01)i

According to International Patent Classification (IPC) or to both national classification and IPC

### B. FIELDS SEARCHED

Minimum documentation searched (classification system followed by classification symbols)

IPC:C01G H01M

Documentation searched other than minimum documentation to the extent that such documents are included in the fields searched

Electronic data base consulted during the international search (name of data base and, where practicable, search terms used)

ENTXT, CNTXT, VEN, ENTXTC, CJFD, ISI WEB OF SCIENCE, CNKI: 三元正极, 锂离子, 电池, 氮气, 金属盐, 镍, 钴, 锰, 碱, 共沉淀, 流量, 流速, 通气量, 一次颗粒, 针状, 晶面, Ternary positive electrode, lithium ion, battery, nitrogen, metal salt, nickel, cobalt, manganese, alkali, co-precipitate, flow rate, ventilation, primary particle, needle, crystal plane, Ni, Co, Mn, D50, 100, 001

### C. DOCUMENTS CONSIDERED TO BE RELEVANT

| Category* | Citation of document, with indication, where appropriate, of the relevant passages | Relevant to claim No. |
|---|---|---|
| PX | CN 118479565 A (XTC NEW ENERGY MATERIALS (XIAMEN) CO., LTD.) 13 August 2024 (2024-08-13) claims 1-10 | 1-10 |
| A | CN 116199272 A (MCC RUIMU NEW ENERGY TECHNOLOGY CO., LTD.) 02 June 2023 (2023-06-02) the claims | 1-10 |
| A | CN 112151790 A (WANHUA CHEMICAL GROUP CO., LTD.) 29 December 2020 (2020-12-29) entire document | 1-10 |
| A | CN 115991507 A (NINGBO RONBAY NEW ENERGY TECHNOLOGY CO., LTD.) 21 April 2023 (2023-04-21) entire document | 1-10 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 January 2025** | **04 February 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

16

**INTERNATIONAL SEARCH REPORT**

| International application No. |
| --- |
| **PCT/CN2024/124679** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 113979489 A (GOLD SHINE ENERGY MATERIALS CO., LTD. et al.) 28 January 2022 (2022-01-28)<br>entire document | 1-10 |
| A | CN 116375104 A (YIBIN GUANGYUAN LITHIUM ELECTRIC MATERIAL CO., LTD. et al.) 04 July 2023 (2023-07-04)<br>entire document | 1-10 |
| A | KR 20200013397 A (ECOPRO GEM CO., LTD.) 07 February 2020 (2020-02-07)<br>entire document | 1-10 |

Form PCT/ISA/210 (second sheet) (July 2022)

## INTERNATIONAL SEARCH REPORT
### Information on patent family members

International application No.

**PCT/CN2024/124679**

| Patent document cited in search report | | | Publication date (day/month/year) | Patent family member(s) | | | Publication date (day/month/year) |
|---|---|---|---|---|---|---|---|
| CN | 118479565 | A | 13 August 2024 | None | | | |
| CN | 116199272 | A | 02 June 2023 | None | | | |
| CN | 112151790 | A | 29 December 2020 | CN | 112151790 | B | 08 March 2022 |
| CN | 115991507 | A | 21 April 2023 | None | | | |
| CN | 113979489 | A | 28 January 2022 | CN | 113979489 | B | 22 March 2022 |
| CN | 116375104 | A | 04 July 2023 | None | | | |
| KR | 20200013397 | A | 07 February 2020 | None | | | |

Form PCT/ISA/210 (patent family annex) (July 2022)